# EUROPÄISCHE PATENTSCHRIFT

(11) **EP 3 132 967 B1**
(45) Veröffentlichungstag und Bekanntmachung des Hinweises auf die Patenterteilung: **11.11.2020**
(21) Anmeldenummer: 16183272.0
(22) Anmeldetag: 08.08.2016
(51) Int. Cl.: B60L 53/14, B60L 53/22

(54) **LADEGERÄT ZUM LADEN DER TRAKTIONSBATTERIE EINES ELEKTROFAHRZEUGS UND ELEKTROFAHRZEUG**
CHARGER FOR CHARGING THE TRACTION BATTERY OF AN ELECTRIC VEHICLE AND ELECTRIC VEHICLE
CHARGEUR DESTINE A CHARGER LA BATTERIE DE PROPULSION D'UN VEHICULE ELECTRIQUE ET VEHICULE ELECTRIQUE

(30) Priorität: 17.08.2015 DE 102015010713
(43) Veröffentlichungstag der Anmeldung: 22.02.2017
(73) Patentinhaber: KOSTAL Automobil Elektrik GmbH & Co. KG, 58513 Lüdenscheid (DE)
(72) Erfinder: Wiegand, Marc, 44265 Dortmund (DE); Fromm, Michael, 45219 Essen (DE)
(74) Vertreter: Kerkmann, Detlef

(56) Entgegenhaltungen:
- EP-A1- 2 899 862
- WO-A2-2012/084131
- WO-A2-2012/104253
- DE-A1-102010 056 008
- US-A1- 2013 249 469

## Beschreibung

Die Erfindung betrifft ein Ladegerät zum Laden der Traktionsbatterie eines Elektrofahrzeugs, mit einer Eingangsschnittstelle, die einen Gleichstromeingang und einen Wechselstromeingang aufweist, und über die wahlweise entweder eine Gleichstromquelle oder eine Wechselstromquelle anschließbar ist, und mit einer Ausgangschnittstelle, an die die Traktionsbatterie anschließbar ist, und mit einem Gehäuse, innerhalb dessen mindestens angeordnet sind: eine Gleichstromleitung, die vom Gleichstromeingang bis zur Ausgangsschnittstelle geführt ist, und ein AC/DC-Wandler, dessen Eingang mit dem Wechselstromeingang verbunden ist, und der einen Spannungsausgang aufweist, der mit der Gleichstromleitung verbindbar oder verbunden ist. Die Erfindung betrifft außerdem ein Elektrofahrzeug mit einem derartigen Ladegerät.

Unter dem Begriff Elektrofahrzeug sollen hier Fahrzeuge verstanden werden, die entweder ausschließlich oder zusätzlich durch Elektromotoren angetrieben werden und die zumindest optional eine elektrische Lademöglichkeit an einer externen Stromquelle vorsehen. Insbesondere sollen so genannte Plug-in-Hybrid-Fahrzeuge hier den Elektrofahrzeugen zugerechnet werden.

Beim leitungsgebundenen Laden von Elektrofahrzeugen haben sich das Wechselstromladen einerseits und das Gleichstromladen andererseits als mögliche Ladenmodi etabliert. Beim Wechselstromladen wird ein ein- oder mehrphasiger Wechselstrom über eine Leitung dem Elektrofahrzeug zugeführt. Ein AC/DC-Wandler erzeugt aus diesem Wechselstrom einen Gleichstrom, der der Traktionsbatterie zugeführt wird. Das vollständige Aufladen einer entladenen Traktionsbatterie dauert dabei üblicherweise mehrere Stunden.

Beim Gleichstromladen wird das Elektrofahrzeug an einer Ladestation mit einem Gleichstrom beaufschlagt. Dabei kann die Traktionsbatterie direkt, das heißt üblicherweise über einen mechanischen oder elektronischen Trennschalter, aber ohne dass Wandlerschaltungen zum Einsatz kommen, mit der Ladestation verbunden werden. Hierdurch ist es möglich, beim Laden deutlich höhere Ströme als beim Wechselstromladen vorzusehen, wodurch der Ladevorgang vergleichsweise schnell ablaufen kann. Allerdings wird durch ein solches Schnellladen die Traktionsbatterie stärker belastet als beim langsameren Laden an einer Wechselstromquelle.

Da beide Ladearten jeweils Vor- und Nachteile aufweisen, ist es zweckmäßig, wenn ein in ein Elektrofahrzeug eingebautes Ladegerät beide Lademodi beherrscht. Aus der deutschen Offenlegungsschrift DE 10 2011 003 543 A1 ist eine Ladevorrichtung für eine Kraftfahrzeug bekannt, welche kabelgebunden sowohl mit einer Wechselstromquelle als auch mit einer Gleichstromquelle verbunden werden kann. Darüber hinaus ist noch eine induktive Schnittstelle vorgesehen, über die ein kabelloses Aufladen des Elektrofahrzeugs erfolgen kann.

Zahlreiche in Elektrofahrzeugen eingebaute Komponenten, wie etwa elektrische Motoren, Klimakompressoren, Heizungen, elektrische Wandlerschaltungen und Kühlmittelpumpen für den Hochvoltstromkreis erzeugen in ihrem Betrieb elektromagnetische Störungen, die sich über das Fahrzeugbordnetz ausbreiten können. Die Grenzwerte für zulässige Störaussendungen von in Elektrofahrzeugen verbauten Komponenten liegen derzeit noch deutlich über denen, die für ein Gleichstromladen an einer Ladesäule in Zukunft gültig werden. Für eine Einhaltung der Grenzwerte für die elektromagnetische Verträglichkeit (EMV) werden daher zusätzliche Filtermaßnahmen zwingend erforderlich werden. Effektive elektrische Filter erfordern allerdings einen nicht unerheblichen Kostenaufwand.

Es stellte sich die Aufgabe, ein Ladegerät für ein Elektrofahrzeug zu schaffen, das eine gute elektromagnetische Verträglichkeit mit einem relativ geringen Aufwand erreicht.

Diese Aufgabe wird erfindungsgemäß dadurch gelöst, dass in die Gleichstromleitung vor der Ausgangsschnittstelle ein EMV-Filter eingefügt ist, und dass der Spannungsausgang des AC/DC-Wandlers über ein ein Netzfilter ausbildendes Ausgangsfilter mit der zum Eingang des EMV-Filters führenden Gleichstromleitung verbindbar oder verbunden ist.

Durch diesen Aufbau kann eine Begrenzung elektromagnetischer Störaussendungen auf eine sehr wirtschaftliche Weise erreicht werden. Das an den Ausgang des AC/DC-Wandlers geschaltete Ausgangsfilter ist beim Wechselstromladen mit dem EMV-Filter kaskadiert. Dies bedeutet, dass die beiden als separate Teile ausgeführten Filter derart elektrisch zusammengeschaltet sind, dass sie sich gegenseitig in ihren Wirkungen ergänzen.

Dieses wird hier durch eine Reihenschaltung des Ausgangsfilters des AC/DC-Wandlers mit dem EMV-Filter in der Gleichstromleitung erreicht, wobei die Verbindung vom Ausgangsfilter zur Gleichstromleitung entweder dauerhaft besteht oder bedarfsweise, also speziell beim Wechselstromladen, geschaltet wird. Das EMV-Filter in der Gleichstromleitung, welches für eine Filterung beim Gleichstromladen vorgesehen ist, kann dadurch beim Wechselstromladen mitverwendet werden.

Hierdurch kann das Ausgangsfilter des AC/DC-Wandlers besonders einfach und kostengünstig ausgelegt sein, da es nur die Störsignale ausfiltern muss, die speziell beim Betrieb des AC/DC-Wandlers auftreten. Vorteilhafterweise kann das Ausgangsfilter auf diese spezifischen Störungen hin optimiert sein. Hierbei wird das Ausgangsfilter zusätzlich durch das nachgeschaltete EMV-Filter unterstützt.

Dabei ist es vorteilhaft, dass das Ausgangsfilter ein eigenständiges Filter ist, da das Wechselstromladen üblicherweise mit einer sehr viel geringeren Stromstärke erfolgt als das Gleichstromladen. Die Bauteile des Ausgangsfilters können dadurch, im Vergleich zu den Bauteilen des EMV-Filters, für eine deutlich niedrigere Strombelastbarkeit ausgelegt sein.

Diese Vorteile könnten durch ein einziges universelles Filter an der Ausgangsschnittstelle des Ladegeräts nicht erreicht werden. Da darin sämtliche Bauteile den hohen Stromstärken, die beim Gleichstromladen auftreten, standhalten müssten, wäre der erforderliche Kostenaufwand im Vergleich deutlich höher.

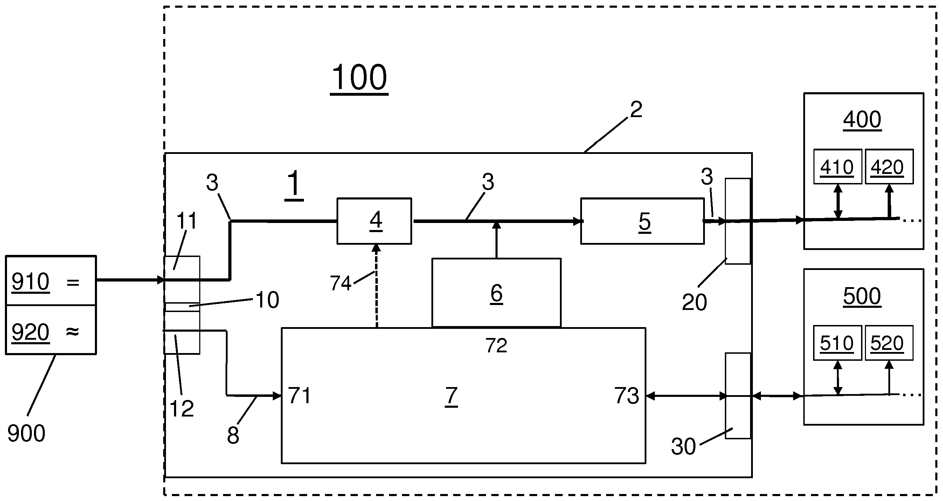

Ein Ausführungsbeispiel der Erfindung ist in der Zeichnung skizzenhaft dargestellt. Die einzige Figur zeigt in einer schematischen Darstellung ein erfindungsgemäß ausgebildetes Ladegerät 1 als Teil eines ebenfalls erfindungsgemäß ausgeführten Elektrofahrzeugs 100.

Die zum Elektrofahrzeug 100 gehörenden Komponenten sind innerhalb einer gestrichelten Umrandung dargestellt. Zu diesen Komponenten gehören ein Hochspannungsbordnetz 400, ein Niederspannungsbordnetz 500, sowie das Ladegerät 1.

Die Komponenten des Ladegeräts 1 sind von einer durchgehenden Umrandung umgeben, die zugleich das Gehäuse 2 des Ladegeräts 1 symbolisch darstellt. An den Begrenzungen des Gehäuses 2 sind mehrere elektrische Schnittstellen 10, 20, 30 angeordnet, die, vorzugsweise als geschirmte Steckverbinder ausgeführt sind.

Eine der Schnittstellen des Ladegeräts 1 ist die Eingangsschnittstelle 10, welche einen Gleichstromeingang 11 und einen Wechselstromeingang 12 aufweist, über die wahlweise eine elektrische Verbindung zu einer Gleichstromquelle 910 oder zu einer Wechselstromquelle 920 hergestellt werden kann. Dabei kann für den Gleichstromeingang 11 und den Wechselstromeingang 12 entweder jeweils ein eigener oder auch ein gemeinsamer Steckverbinder vorgesehen sein.

Zwei weitere Schnittstellen 20, 30 bilden Gleichstromausgänge des Ladegeräts 1. Hierbei ist die Ausgangsschnittstelle 20 ein Hochspannungsausgang, der mit dem Hochspannungsbordnetz 400 des Elektrofahrzeugs 100 verbunden ist. Zum Hochspannungsbordnetz 400 gehören sowohl die Traktionsbatterie 410 als auch diverse Hochspannungsverbraucher 420.

Den zweiten Gleichstromausgang bildet eine Niederspannungsschnittstelle 30, die mit einem Niederspannungsbordnetz 500 des Elektrofahrzeugs 100 verbunden ist. Das Niederspannungsbordnetz 500 weist eine Niederspannungsbatterie 510 mit einer Spannung von 12, 24 oder 48 Volt, sowie diverse elektrische Verbraucher 520 mit einem dem entsprechenden Spannungsbedarf auf.

Das Ladegerät 1 kann innerhalb des Elektrofahrzeugs 100 derart angeordnet sein, dass der oder die Steckverbinder der Schnittstelle 10 von der Karosserie des Elektrofahrzeugs 100 her zugänglich sind. Alternativ können an der Fahrzeugkarosserie aber auch eigenständige Steckverbinder vorgesehen sein, die mit der Schnittstelle 10 elektrisch verbunden sind.

Die Gleichstromquelle 910 und die Wechselstromquelle 920 sind hier schematisch als Bestandteile einer Ladestation 900 dargestellt, wobei in der Figur beispielhaft die Gleichstromquelle 910 mit dem Gleichstromeingang 11 der Eingangsschnittstelle 10 verbunden ist.

Der Gleichstromeingang 11 ist mit einer Gleichstromleitung 3 verbunden, die bis zur Ausgangsschnittstelle 20 geführt ist. In die Gleichstromleitung 3 ist ein EMV-Filter 5 eingefügt, welches in die Gleichstromleitung 3 eingestreute Störimpulse ausfiltert. Ein mit dem Gleichstromeingang 11 verbundener Teil der Gleichstromleitung 3 kann bedarfsweise durch einen steuerbaren elektromechanischen oder elektronischen Trennschalter 4 abgetrennt werden.

Der Wechselstromeingang 12 der Eingangsschnittstelle 10 ist mit dem Eingang 71 eines AC/DC-Wandlers 7 verbunden. Der in das Ladegerät 1 integrierte AC/DC-Wandler 7 weist zwei Spannungsausgänge auf, und zwar einen Spannungsausgang 72 für eine relativ hohe Spannung und einen Niederspannungsausgang 73. Die interne Elektronik des AC/DC-Wandlers 7 kann insbesondere auch zur Ansteuerung des elektronischen Trennschalters 4 über eine Steuerleitung 74 vorgesehen sein.

Der Niederspannungsausgang 73 ist mit der Niederspannungsschnittstelle 30 verbunden, über die eine Spannung für die Niederspannungsbatterie 510 und Verbraucher 520 des Niederspannungsbordnetzes 500 ausgegeben wird.

Der AC/DC-Wandler 7 erzeugt außerdem eine zweite, weitaus höhere Spannung, die zum Laden der Traktionsbatterie 410 geeignet ist und gibt diese über ein Ausgangsfilter 6 auf die Gleichstromleitung 3. Über das EMV-Filter 5 liegt diese Spannung damit an der Hochspannungsschnittstelle 20 zum Laden der Traktionsbatterie 410 an. Während des Wechselstromladens oder vorzugsweise immer, wenn kein Gleichstromladen stattfindet, steuert der AC/DC-Wandler 7 den Trennschalter 4 in den geöffneten Schaltzustand, so dass möglichst wenige Störungen über die Gleichstromleitung 3 in die Umgebung abgestrahlt werden.

Es ist davon auszugehen, dass die Hochspannungsverbraucher 420 des Hochspannungsbordnetzes 400, die mit der Traktionsbatterie 410 verbunden sind, durch ihren Betrieb die in Zukunft gültigen strengeren Emissionsgrenzwerte für elektromagnetische Störungen weitgehend ausschöpfen werden. Eine Einhaltung der zukünftigen Grenzwerte durch ein ladendes Elektrofahrzeug 100 wird aus diesen Gründen nur mit einer Filterung möglich sein.

Hierzu ist zunächst das bereits erwähnte EMV-Filter 5 vorgesehen, welches zwischen der Eingangsschnittstelle 11 und dem Hochspannungsbordnetz 400 in die Gleichstromleitung 3 eingefügt ist. Der innere Aufbau des EMV-Filters 5 ist hier nicht in Detail dargestellt, da das Aufbauprinzip solcher Filterschaltungen als bekannt vorausgesetzt werden kann. Ein geeigneter Aufbau entspricht beispielsweise dem eines Netzfilters mit sogenannten X- und Y-Kondensatoren und einer Filterdrossel, wie es etwa in dem Online-Lexikon Wikipedia (https://de.wikipedia.org/wiki/Netzfilter) beschrieben ist. Die erforderliche Übertragungsfunktion des EMV-Filters 5 kann aus der Differenz der entsprechenden gesetzlichen Grenzwertlinien abgeleitet werden. Das EMV-Filter 5 kann sowohl als aktives als auch als passives Filter ausgeführt sein.

Der Aufbau des Ausgangsfilters 6 unterscheidet sich nicht grundsätzlich von dem des EMV-Filters 5 und entspricht daher ebenfalls dem bekannten Aufbauprinzip eines Netzfilters. Im Gegensatz zu dem EMV-Filter 5 in der Gleichstromleitung 3 ist das Ausgangsfilter 6 aber auf die Filterung der durch die Taktung des AC/DC-Wandlers 7 entstehenden Störfrequenzen optimiert. Darüber hinaus sind die Bauteile des Ausgangsfilters 6 auf die, im Vergleich zu den Stromstärken des Gleichstromladens, deutlich geringeren Ausgangsströme des AC/DC-Wandlers 7 ausgelegt, wodurch das Ausgangsfilter 6 im Vergleich zum EMV-Filter 5 recht kostengünstig herstellbar ist. Außerdem können Gewicht und Bauraum eingespart werden.

Speziell für das Wechselstromladen der Traktionsbatterie ist für die Filterung des Spannungsausgangs 72 das AC/DC-Wandlers 7 eine kaskadierte Anordnung der vorhandenen Filter 6, 5 vorgesehen. Da mit dem EMV-Filter 5 zwischen dem Hochspannungsbordnetz 400 und der Gleichstromquelle 910 bereits ein Teil der Filterwirkung zur Verfügung gestellt wird, lässt sich das Ausgangsfilter 6 des AC/DC-Wandlers 7 dementsprechend nochmals einfacher und kostengünstiger auslegen.

Als Beispiel sei angenommen, dass im Ausgangspfad des AC/DC-Wandlers 7 in Richtung des Hochspannungsbordnetzes 400 eine Filterwirkung von 60 dB erforderlich sei. Wenn in die Gleichstromleitung 3 zwischen dem Hochspannungsbordnetz 400 und dem Gleichstromeingang 11 der Eingangsschnittstelle 10 bereits eine Filterwirkung von beispielsweise 20 dB implementiert wurde, lässt sich das Ausgangsfilter 6 nun auf eine Filterwirkung von 40 dB dimensionieren. Daher ist die in der Zeichnung gezeigte Anordnung der in Reihe geschalteten Filterstufen 6, 5 vorteilhaft.

Bei der vorgesehenen kaskadierten Anordnung von Filtern 6, 5 ist es besonders vorteilhaft, diese in jeweils eigenen, geschirmten Gehäusen anzuordnen. Hierdurch lässt sich die Filterwirkung insbesondere für hohe Frequenzen erhöhen, weil sich durch diese Maßnahme die Schirmdämpfung erhöht.

Weitere Vorteile können sich durch die zusätzliche Nutzung einer im Ladegerät 1 bereits vorhanden Kühlungsvorrichtung ergeben. Je nach Auslegung kann es notwendig sein, das EMV-Filter 5 aufgrund der mit hohen Strömen einhergehenden Verlustleistung zu kühlen. Derzeit bekannte Ladegeräte besitzen häufig eine Wasserkühlung, die für diesen Zweck vorteilhaft mit genutzt werden kann.

### Bezugszeichen

- 1: Ladegerät
- 2: Gehäuse
- 3: Gleichstromleitung
- 4: Trennschalter (DC-Schalter)
- 5: EMV-Filter
- 6: Ausgangsfilter
- 7: AC/DC-Wandler
- 10: Eingangsschnittstelle
- 11: Gleichstromeingang
- 12: Wechselstromeingang
- 20: Ausgangsschnittstelle (Hochspannungsschnittstelle)
- 30: Ausgangsschnittstelle (Niederspannungsschnittstelle)
- 71: Eingang (des AC/DC-Wandlers)
- 72: Spannungsausgang (des AC/DC-Wandlers)
- 73: Niederspannungsausgang (des AC/DC-Wandlers)
- 74: Steuerleitung
- 100: Elektrofahrzeug
- 400: Hochspannungsbordnetz
- 410: Traktionsbatterie
- 420: Hochspannungsverbraucher
- 500: Niederspannungsbordnetz
- 510: Niederspannungsbatterie
- 520: Verbraucher
- 420: Niederspannungsverbraucher
- 900: Ladestation
- 910: Gleichstromquelle
- 920: Wechselstromquelle

## Patentansprüche

1. Ladegerät (1) zum Laden der Traktionsbatterie (410) eines Elektrofahrzeugs (100),
mit einer Eingangsschnittstelle (10), die einen Gleichstromeingang (11) und einen Wechselstromeingang (12) aufweist, und über die wahlweise entweder eine Gleichstromquelle (910) oder eine Wechselstromquelle (920) anschließbar ist, und
mit einer Ausgangschnittstelle (20), an die die Traktionsbatterie (410) anschließbar ist, und
mit einem Gehäuse (2), innerhalb dessen mindestens angeordnet sind:
eine Gleichstromleitung (3), die vom Gleichstromeingang (11) bis zur Ausgangsschnittstelle (20) geführt ist, und
ein AC/DC-Wandler (7), dessen Eingang (71) mit dem Wechselstromeingang (12) verbunden ist und der einen Spannungsausgang (72) aufweist, der mit der Gleichstromleitung (3) verbindbar oder verbunden ist,
**dadurch gekennzeichnet,**
**dass** in die Gleichstromleitung (3) vor der Ausgangsschnittstelle (20) ein EMV-Filter (5) eingefügt ist, und
**dass** der Spannungsausgang (72) des AC/DC-Wandlers (7) über ein ein Netzfilter ausbildendes Ausgangsfilter (6) mit der zum Eingang des EMV-Filters (5) führenden Gleichstromleitung (3) verbindbar oder verbunden ist.

2. Ladegerät nach Anspruch 1, **dadurch gekennzeichnet, dass** das EMV-Filter (5) innerhalb oder direkt am Gehäuse (2) des Ladegerätes (1) angeordnet ist.

3. Ladegerät nach Anspruch 1 oder 2, **dadurch gekennzeichnet, dass** das Ladegerät (1) mit einer externen Kühlungsvorrichtung gekoppelt ist, welche zur Kühlung zumindest des AC/DC-Wandlers (7) vorgesehen ist.

4. Ladegerät nach Anspruch 3, **dadurch gekennzeichnet, dass** das EMV-Filter (5) mit einer externen Kühlungsvorrichtung gekoppelt ist.

5. Ladegerät (1) nach Anspruch 1, **dadurch gekennzeichnet, dass** am Gehäuse (2) eine Niederspannungsschnittstelle (30) angeordnet ist, die mit einem Niederspannungsausgang des AC/DC-Wandlers (7) verbunden ist.

6. Elektrofahrzeug, **dadurch gekennzeichnet, dass** es ein Ladegerät (1) mit den Merkmalen des Anspruchs 1 aufweist.

## Claims

1. A charger (1) for charging the traction battery (410) of an electric vehicle (100) having an input interface (10) which has a direct current input (11) and an alternating current input (12) and via which either a direct current source (910) or an alternating current source (920) can be connected, and
with an output interface (20) to which the traction battery (410) can be connected, and
with a housing (2), within which at least
a direct current line (3), which is led from the direct current input (11) to the output interface (20), and
an AC/DC converter (7) whose input (71) is connected to the AC input (12) and which has a voltage output (72) which can be connected or is connected to the DC line (3),
**characterized by this,**
in that an EMC filter (5) is inserted into the DC line (3) upstream of the output interface (20), and
in that the voltage output (72) of the AC/DC converter (7) can be connected or is connected to the DC line (3) leading to the input of the EMC filter (5) via an output filter (6) forming a line filter.

2. Charging device according to claim 1, **characterized in that** the EMC filter (5) is arranged inside or directly on the housing (2) of the charging device (1).

3. Charging device according to claim 1 or 2, **characterized in that** the charging device (1) is coupled to an external cooling device which is provided for cooling at least the AC/DC converter (7).

4. Charging device according to claim 3, **characterized in that** the EMC filter (5) is coupled to an external cooling device.

5. Charging device (1) according to claim 1, **characterized in that** a low-voltage interface (30) is arranged on the housing (2), which is connected to a low-voltage output of the AC/DC converter (7).

6. Electric vehicle, **characterized in that** it comprises a charger (1) having the features of claim 1.

## Revendications

1. Appareil de chargement (1) pour charger une batterie de traction (410) d'un véhicule électrique (100),
avec une interface d'entrée (10), qui présente une entrée de courant continu (11) et une entrée de courant alternatif (12), et par l'intermédiaire de laquelle peut être raccordée, au choix, soit une source de courant continu (910) soit une source de courant alternatif (920), et
avec une interface de sortie (20) à laquelle la batterie de traction (410) peut être raccordée, et
avec un boitier (2) à l'intérieur duquel sont disposés au moins une conduite de courant continu (3), qui s'étend de l'entrée de courant continu (11) jusqu'à l'interface de sortie (20), et
avec un convertisseur AC/DC (7) dont l'entrée est reliée à l'entrée (71) de courant alternatif (12) et qui présente une sortie de tension (72) qui peut être reliée ou est reliée à la conduite de courant continu (3),
**caractérisé en ce que,**
dans la conduite de courant continu (3), un filtre EMV (5) est inséré en amont de l'interface de sortie (20), et
**que** la sortie de tension (72) de l'onduleur AC/DC (7), par l'intermédiaire d'un filtre de sortie (6) formant un filtre de réseau, peut être raccordée ou est raccordée à la conduite de courant continu (3) menant à l'entrée du filtre EMV (5).

2. Appareil de chargement selon la revendication 1, **caractérisé en ce que** le filtre EMV (5) est disposé à l'intérieur ou directement sur le boitier (2) de l'appareil de chargement (1).

3. Appareil de chargement selon revendication 1 ou 2, **caractérisé en ce que** l'appareil de chargement (1) est couplé avec un dispositif de refroidissement externe, qui est prévu pour le refroidissement d'au moins le convertisseur (7).

4. Appareil de chargement selon la revendication 3, **caractérisé en ce que** le filtre EMV (5) est couplé avec un dispositif de refroidissement externe.

5. Appareil de chargement (1) selon la revendication 1, **caractérisé en ce que**, sur le boitier (2), est disposée une interface basse tension (30) qui est raccordée à un convertisseur AC/DC (7).

6. Véhicule électrique, **caractérisé en ce qu'**il est pourvu d'un appareil de chargement (1) présentant les caractéristiques de la revendication 1.
